# EUROPÄISCHE PATENTSCHRIFT

(11) **EP 0 533 675 B1**
(45) Veröffentlichungstag und Bekanntmachung des Hinweises auf die Patenterteilung: **06.03.1996**
(21) Anmeldenummer: 90916181.2
(22) Anmeldetag: 06.11.1990
(51) Int. Cl.: H04N 7/00, H04N 7/12

(54) **ÜBERTRAGUNGSSYSTEM**
TRANSMISSION SYSTEM
DISPOSITIF DE TRANSMISSION

(30) Priorität: 14.11.1989 DE 3937813
(43) Veröffentlichungstag der Anmeldung: 31.03.1993
(73) Patentinhaber: Deutsche Thomson-Brandt GmbH, D-78003 Villingen-Schwenningen (DE)
(72) Erfinder: KEESEN, Heinz-Werner, D-3000 Hannover 1 (DE)
(74) Vertreter: Einsel, Robert, Dipl.-Ing.
(86) Internationale Anmeldenummer: EP9001850
(87) Internationale Veröffentlichungsnummer: WO9107847

(56) Entgegenhaltungen:
- EP-A- 0 279 625
- EP-A- 0 359 094
- US-A- 4 800 426
- IEEE TRANSACTIONS ON BROADCASTING. vol. BC-33, no. 4, Dezember 1987, NEW YORK US Seiten 107 - 115; W.E. GLENN et al.: "High definition television compatible transmission system"
- 23th Annual SMPTE Television Conference, SAN FRANSISCO Februar 1989, Seiten 287 - 295; W.E. GLENN et al.: "High-Definition Transmission, Signal Processing, and Display"
- IEEE TRANSACTIONS ON CONSUMER ELECTRONICS. vol. 34, no. 3, August 1988, NEW YORK US Seiten 484 - 492; W.E. BRETL et al.: "3XNTSC-A "LEAPFROG" PRODUCTION STANDARD FOR HDTV"
- 23th Annual SMPTE Television Conference, SAN FRANSISCO Februar 1989, Seiten 312 - 360; YOZO ONO: "HDTV and Today's Broadcasting World"
- BBC RESEARCH DEPARTMENT REPORT. no. 11, September 1987, TADWORTH GB Seiten 1 - 20; G.A. THOMAS et al.: "TELEVISION MOTION MEASUREMENT FOR DATV AND OTHER APPLICATIONS"
- PROC.SPIE, US, San Diego, August 1983, Seiten 71-74; R.LIPPMANN: "Low-frame-rate air-to-ground TV using displacement estimation"

## Beschreibung

WO-A-9003082 (Artikel 54.3 EPC) beschreibt ein Übertragungssystem für ein zeitlich und örtlich hochaufgelöstes Bildsignal großer Bandbreite zur Übertragung über zwei Übertragungskanäle geringerer Bandbreite, wobei ein erster Übertragungskanal Bildsignale einer ersten Norm mit geringerer örtlicher und höherer zeitlicher Auflösung überträgt und ein zweiter Übertragungskanal ein örtlich hochaufgelöstes, zeitlich niedrig aufgelöstes Bildsignal überträgt.

Es wird ein Übertragungssystem sowie ein Empfänger für ein hochaufgelöstes Fernsehsignal angegeben, welches bei vorhandenen bandbegrenzten Übertragungskanälen auf der Empfängerseite die Rekonstruktion von Bildinformation auch bei Empfang nur eines Kanals ermöglicht.

Auf der Senderseite wird ein HDTV-Signal mit hoher örtlicher und zeitlicher Auflösung in zwei Signale aufgespalten. Das erste Signal weist eine geringe örtliche, aber hohe zeitliche Auflösung auf und kann durch entsprechende Codierung in ein Standard-TV-Signal, z.B. PAL, Secam, NTSC oder D2-MAC oder digital mit oder ohne Datenreduktion, umgesetzt und über einen ersten, bandbegrenzten Kanal übertragen werden.

Das zweite Signal weist eine hohe örtliche, aber geringe zeitliche Auflösung auf. Dies kann z.B. durch Auslassen von Bildern, vorzugsweise jedes zweiten Bildes, erreicht werden. Durch einen entsprechenden Coder kann es z.B. in ein HD-MAC-Signal umgesetzt oder auch direkt digital mit oder ohne Datenreduktion über einen zweiten bandbegrenzten Kanal übertragen werden.

Mit Hilfe des ersten Kanals ist auf der Empfängerseite ein vollständiges örtlich nieder- und zeitlich hochaufgelöstes Bildsignal empfangbar.

Über den zweiten Kanal ist gegenüber dem Stand der Technik ein vollständiges zeitlich nieder- und örtlich hochaufgelöstes Bildsignal empfangbar, aus welchen durch geeignete Decodierung und Maßnahmen zur Bildregeneration ein adäquates örtlich hochaufgelöstes Bildsignal, im folgenden HD-Signal genannt, rekonstruierbar ist.

Die Regenerationsmaßnahmen dienen dazu, die durch die empfängerseitig durch Weglassen von Bildern insbesondere bei bewegten Sequenzen verlorengegangene Information weitgehendst zu rekonstruieren.

Um ein vollständiges HDTV-Signal zu regerieren, sind empfängerseitig beide Kanäle auszuwerten. Dazu wird insbesondere bei dynamischem Bildinhalt bei der Rekonstruktion des HD-Bildes die zeitlich hochaufgelöste Bildinformation des ersten Kanals herangezogen.

Es entsteht so ein zu den herkömmlichen Übertragungssystemen kompatibles HDTV-Übertragungssystem, wobei der erste Kanal ein Bildsignal mit einer dem heutigen Fersehstandard entsprechenden Auflösung bereitgestellt und der zweite Kanal ein vollständiges Bildsignal hoher örtlicher Auflösung liefert.

Der vorliegenden Erfindung liegt die Aufgabe zugrunde, die Möglichkeit zu schaffen, auch über den zweiten Übertragungskanal eine HDTV-ähnliche Übertragung zu gewährleisten, welche wenigstens die hohe örtliche Auflösung des HDTV-Bildes besitzt.
Diese Aufgabe wird durch die im Patentanspruch 1 angegebenen Merkmale gelöst. Vorteilhafte Weiterbildungen der Erfindung sind in den Unteransprüchen angegeben.

Eine Alternativlösung ist im unabhängigen Anspruch 2 beansprucht.

Aus der WO-A-9003082 ist es bekannt, daß im Coder Bewegungsvektoren ermittelt und übertragen werden. Weil die Kanalkapazität aber begrenzt ist, können die Bewegungsvektoren nicht mit beliebiger Genauigkeit bzw. nur mit einem begrenzten Betrag übertragen werden. In einem verbesserten Empfänger können aber genauere Bewegungsvektoren gebildet werden, vorzugsweise mit Ausnutzung der übertragenen Bewegungsvektoren.

Wenn der Empfänger die Signale des ersten Übertragungskanals mit den Signalen aus dem zweiten Übertragungskanal zusammensetzt, müssen die Signale zueinander passen. Wenn die Signale über zwei verschiedene Kanäle übertragen werden, müssen insbesondere ihre Pegel und ihre Phasenlage angepaßt sein. Zu diesem Zweck enthält ein Kanal Referenzsignale für Pegel und Phase.

Um dem Benutzer die Eingabe bzw. Programmierung von jeweils zwei Kanälen zur Wiedergabe einer HDTV-Sendung zu ersparen, kann bzw. können der erste Kanal oder der zweite Kanal oder beide Kanäle eine Zusatzinformation enthalten, mit deren Hilfe der Empfänger selbsttätig den jeweils anderen benötigten Kanal ermitteln und empfangen kann.

Wenn in einem entsprechenden zukünftigen Fernsehsystem beide Kanäle als digitale Kanäle zur Übertragung von HDTV-Signalen bei einer zeitlichen Lage der Bilder des ersten Kanals zwischen den Bildern des zweiten Kanals verwendet werden, kann in einem entsprechenden Empfänger, der notwendigerweise Bildspeicher beinhaltet, durch das Entfallen einer Bildregenerationsschaltung und durch eine bildweise Umschaltung zwischen Bildspeichern eine bessere Ausnutzung der Bildspeicher bzw. eine Verringerung der Anzahl der Bildspeicher erzielt werden.

Zwei Ausführungsbeispiele werden nachstehend anhand der Zeichnungen im einzelnen erläutert. Es zeigen:
- Fig. 1: Blockschaltbild eines HD-Decoders mit verbesserter Bewegungsvektorberechnung
- Fig. 2: bekanntes 2-Kanal-HDTV-Übertragungssystem mit je einem analogen und digitalen Kanal
- Fig. 3: Blockschaltbild eines bekannten Bildregenerators
- Fig. 4: erfindungsgemäßes 2-Kanal-HDTV-Übertragungssystem mit zwei digitalen Kanälen

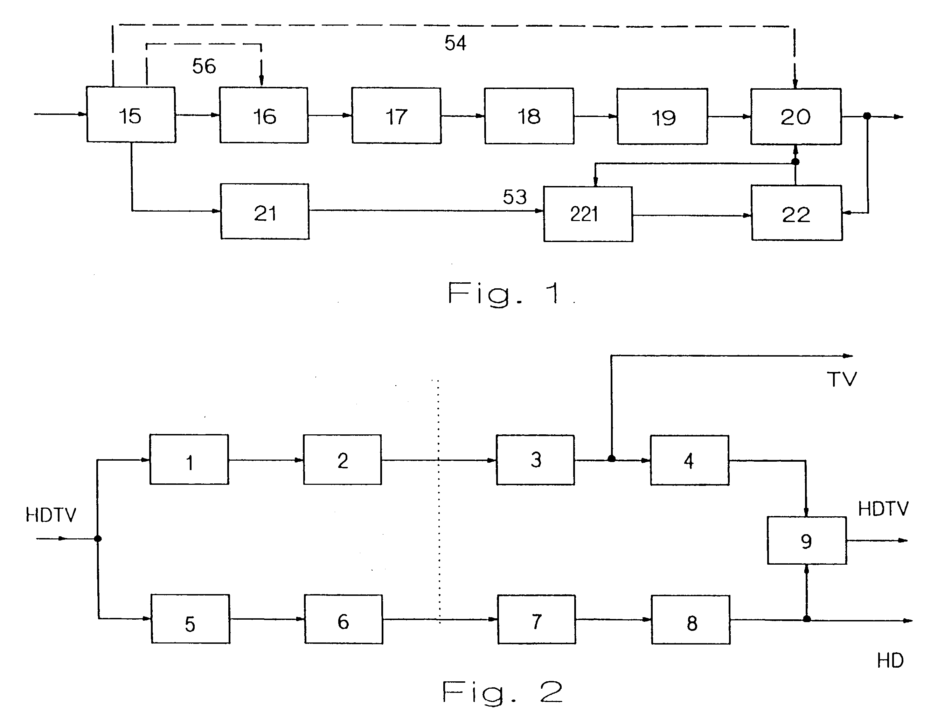

Fig. 1 zeigt einen gegenüber dem entsprechenden HD-Decoder 7 aus W090/03082 verbesserten HD-Decoder 7 mit einem Pufferspeicher und Videomultiplexer 15. Je ein Ausgang des Pufferspeichers 15 führt auf einen Decoder 16 und auf einen Bewegungsvektor-Decoder 21. Ein Ausgang des Decoders 16 führt über eine inverse Wichtung 17, einen inversen Abtaster 18 und einen inversen diskreten Cosinustransformator 19 auf eine Blockrekonstruktionsschaltung 20. Der Ausgang der Blockrekonstruktionsschaltung 20 führt auf eine nicht dargestellte Bildregenerationsschaltung sowie zu einem ersten Eingang eines Bildspeichers 22. Der Ausgang des Bewegungsvektor-Decoders 21 führt zunächst zu einem Bewegungsvektor-Korrigierer 211 und weiter auf einen zweiten Eingang des Bildspeichers 22.

Im Decoder 16 werden übertragene Adressen und Koeffizienten wieder in ihre ursprüngliche Form vor der Übertragung decodiert. Entsprechendes führt der Bewegungsvektor-Decoder 21 für die Bewegungsvektoren durch. Weil aber für die Übertragung der Bewegungsvektoren nur eine begrenzte Datenrate zur Verfügung steht, weisen die Bewegungsvektoren auch nur eine begrenzte Genauigkeit bzw. einen begrenzten Betrag auf. In einem Empfänger mit einem verbesserten HD-Decoder 7 kann jedoch durch einen Vergleich von neu berechneten Bildpunkten mit schon vorhandenen umgebenden Bildpunkten geprüft werden, ob die Bewegungsvektoren einen korrekten Wert haben. Ist dies nicht der Fall, werden sie mit Hilfe von bereits berechneten Bildpunkten aus dem Bildspeicher 22 im Bewegungsvektor-Korrigierer 211 entsprechend angepaßt.

Fig. 2 zeigt das in WO-A-9003082 vorgeschlagene 2-Kanal-HDTV-Übertragungssystem. Ein von einer Quelle erzeugtes HDTV-Signal wird einer ersten Übertragungsstrecke, bestehend im Sender aus einem Transcoder 1 und einem TV-Encoder 2 und im Empfänger aus einem TV-Decoder 3 und einem Transcoder 4, und einer zweiten Übertragungsstrecke, bestehend im Sender aus einer Bildunterdrückungsschaltung 5 und einem HD-Encoder 6 und im Empfänger aus einem HD-Decoder 7 und einer Bildregenerationsschaltung 8, zugeführt.

Der Transcoder 1 der ersten Übertragungsstrecke reduziert durch entsprechende Filterung die horizontale Auflösung des Bildes um 2:1 und die vertikale Auflösung um 3:2. Außerdem wird das progressiv abgetastet vorliegende HDTV-Signal in ein mit Zeilensprung behaftetes Signal umgesetzt, wobei die zeitliche Auflösung erhalten bleibt. Das Ausgangssignal des Transcoders 1 wird dem TV-Encoder 2 zugeführt, der ein Standard-TV-Signal erzeugt, z.B. in PAL, Secam, NTSC oder D2-MAC, und dessen Ausgang mit einem ersten Übertragungskanal verbunden ist.

Im Empfangsteil für den ersten Übertragungskanal wird das ankommende Standard-TV-Signal im TV-Decoder 3 decodiert. Am Ausgang des TV-Decoders 3 ist dann das Standard-TV-Signal abgreifbar.

Das HDTV-Signal, das der zweiten Übertragungsstrecke zugeführt wird, wird zur Anpassung an einen bandbegrenzten zweiten Übertragungskanal einer Auslassung von Bildern unterzogen. Mit Hilfe der Bildunterdrückungsschaltung 5 wird z.B. nur jedes zweite Bild übertragen. Das Ausgangssignal der Bildunterdrückungsschaltung 5 gelangt über den HD-Encoder 6 auf einen zweiten Übertragungskanal. Der HD-Encoder erzeugt z.B. ein digitales Signal, das nach Datenreduktion über den Kanal übertragen wird.

Im Empfangsteil für den zweiten Übertragungskanal wird das ankommende Signal dem HD-Decoder 7 zugeführt. Der Ausgang des HD-Decoders 7 ist mit der Bildregenerationsschaltung 8 verbunden, die unter Ausnutzung von mitübertragenen Bewegungsvektoren eine Rekonstruktion der empfängerseitig ausgelassenen Bilder durchführt. Am Ausgang der Bildregenerationsschaltung 8 ist dann ein HD-Signal mit hoher örtlicher Auflösung und ursprünglicher zeitlicher Auflösung abgreifbar, jedoch mit möglichen Fehlern im Bereich bewegter Bildinhalte.

Um diese Fehler im Bereich bewegter Bildteile zu minimieren und somit die ursprüngliche hohe zeitliche Auflösung des Quell-HDTV-Signals zu erzielen, wird mit dem Standard-TV-Eingangssignal im Transcoder 4 eine Invertierung der Funktion des Transcoders 1 vorgenommen. Die Ausgangssignale des Transcoders 4 und der Bildregenerationsschaltung 8, werden einem Kombinationsfilter 9 zugeführt, das durch geeignete Wichtung ein HDTV-Ausgangssignal hoher zeitlicher und örtlicher Auflösung liefert.

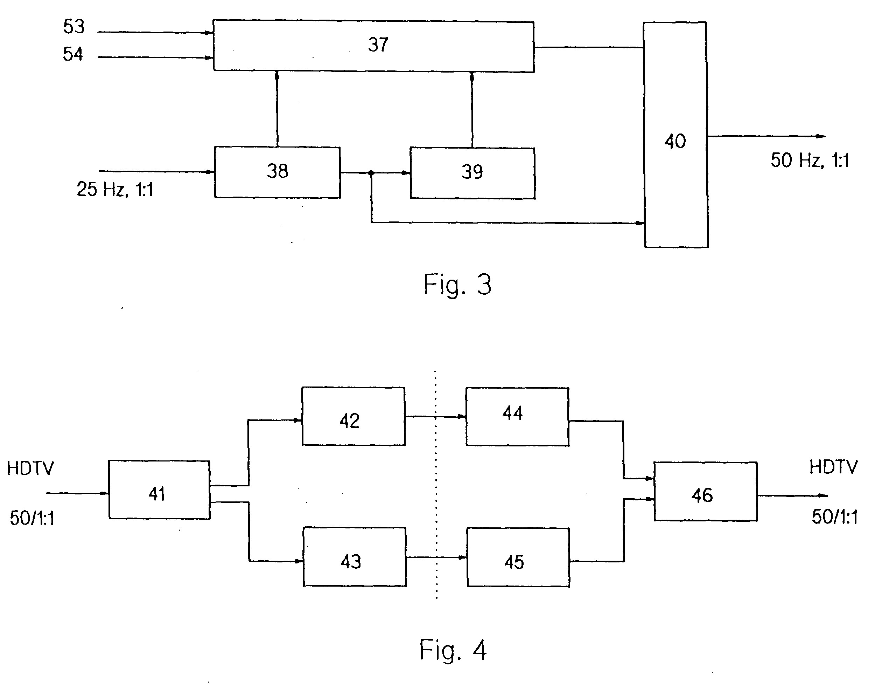

Fig. 3 gibt den in WO-A-9003082 beschriebenen Bildregenerator 8 wieder. Das Ausgangssignal des HD-Decoders 7 wird einem ersten Bildspeicher 38 zugeführt. Ein Ausgang des ersten Bildspeichers 38 führt zu einer Bildinterpolationsschaltung 37, ein weiterer Ausgang zu einem zweiten Bildspeicher 39 und einem Multiplexer 40. Weitere Eingänge der Bildinterpolationsschaltung 37 erhalten weitere Daten aus dem HD-Decoder 7, z.B. die Bewegungsvektoren 53 und die Codermodusinformation 54, also Information über Inter- bzw. Intraframecodierung. Ein Ausgang der Bildinterpolationsschaltung 37 führt auf den Multiplexer 40. Am Ausgang des Multiplexers 40 ist ein HD-Signal mit 1440 * 864 Bildpunkten, 50 Hz, 1:1 abgreifbar.

Wenn nun in einem zukünftigen HDTV-Übertragungssystem über den analogen Kanal auch digitale Information übertragen wird, kann sich in entsprechenden HDTV-Empfängern eine Einsparung von Bildspeichern ergeben.

Fig. 4 zeigt ein entsprechendes HDTV-Übertragungssystem für zwei digitale Kanäle. Ein von einer Quelle erzeugtes HDTV-Signal mit z.B. 50 Hz Bildwechselfrequenz und progressiver Abtastung wird in einer Trennschaltung 41 aufgespalten in ungeradzahlige und geradzahlige Bilder. Die ungeradzahligen Bilder werden in einem ersten HD-Encoder 42 codiert und die geradzahligen Bilder in einem zweiten HD-Encoder 43. Dabei können auch Bewegungsvektoren berechnet und zusammen mit den codierten HD-Bildsignalen zum jeweiligen HD-Decoder übertragen werden. Die Daten für die ungeradzahligen Bilder werden z.B. über den ersten Kanal übertragen und in einem ersten HD-Decoder 44 decodiert. Die Daten für die geradzahligen Bilder werden entsprechend über den zweiten Kanal übertragen und in einem zweiten HD-Decoder 45 decodiert. In einer Kombinationsschaltung 46 werden die Ausgangsdatenströme der beiden HD-Decoder zusammengefaßt und es wird ein HDTV-Signal mit z.B. einem dem Quellsignal entsprechenden Standard erzeugt.

In einem Übertragungssystem gemäß WO-A-9003082 sind drei Bildspeicher (22, 38, 399 enthalten. In dem Übertragungssystem gemäß Fig. 4 sind aber nur zwei Bildspeicher (22 in HD-Decoder 44 und 22 in HD-Decoder 45) enthalten. Der erste 44 und zweite 45 HD-Decoder beinhalten z.B. jeweils einen HD-Decoder entsprechend Fig. 1 . Weil in beiden Kanälen jeweils abwechselnde, vollständig codierte HDTV-Bilder übertragen werden, kann eine Bildregenerationsschaltung 8 gemäß Fig. 3 mit den Bildspeichern 38 und 39 entfallen.
Weil im ersten HD-Decoder 44 und im zweiten HD-Decoder 45 jeweils ein Bildspeicher 22 benötigt wird, andererseits aber zwei Bildspeicher 38 und 39 entfallen, wird insgesamt bei dem 2-Kanal-HDTV-Übertragungssystem mit zwei digitalen Kanälen gegenüber dem 2-Kanal-HDTV-Übertragungssystem gemäß WO-A-9003082 mindestens ein Bildspeicher eingespart.

## Patentansprüche

1. Verfahren zur Übertragung eines zeitlich und örtlich hochaufgelösten Bildsignals großer Bandbreite über zwei Übertragungskanäle geringerer Bandbreite, wobei der erste Übertragungskanal ein erstes, vollständiges Bildsignal einer bekannten Norm geringer örtlicher und hoher zeitlicher Auflösung überträgt, welches von einem Standard-Empfänger decodiert und wiedergegeben werden kann, und wobei der zweite Übertragungskanal ein Hilfssignal überträgt, welches in einem verbesserten Empfänger zusammen mit dem ersten Bildsignal zu einem zeitlich und örtlich hochaufgelösten Bildsignal kombiniert werden kann, **dadurch gekennzeichnet**, daß der zweite Übertragungskanal als Hilfssignal ein vollständiges, örtlich hochaufgelöstes und zeitlich niedrig aufgelöstes Bildsignal überträgt, das von einem verbesserten Empfänger ohne Zuhilfenahme des ersten Bildsignals wiedergegeben werden kann oder kombiniert mit dem ersten Bildsignal decodiert wird - wobei das kombinierte Bildsignal örtlich und zeitlich hochaufgelöst ist - und wobei zusätzlich:
- in mindestens dem zweiten Übertragungskanal Bewegungsvektoren übertragen werden;
- in mindestens einem der Übertragungskanäle eine Zusatzinformation über den jeweils anderen Kanal übertragen wird, die zur automatischen Abstimmung auf diesen Kanal verwendbar ist;
- ein Übertragungskanal Referenzsignale für Amplitude und Phasenlage zur Anpassung an Amplitude und Phasenlage des Bildsignals des anderen Kanals überträgt.

2. Verfahren zur Übertragung eines zeitlich und örtlich hochaufgelösten Bildsignals großer Bandbreite über zwei Übertragungskanäle geringerer Bandbreite, wobei der erste Übertragungskanal ein erstes Bildsignal geringerer Auflösung und der zweite Übertragungskanal ein Hilfssignal überträgt, welches in einem verbesserten Empfänger zusammen mit dem ersten Bildsignal zu einem zeitlich und örtlich hochaufgelösten Bildsignal kombiniert wird, **dadurch gekennzeichnet**, daß der erste Übertragungskanal vom Quell-Bildsignal die vollständigen Bilder 2*n mit geringer zeitlicher und hoher örtlicher Auflösung digital codiert überträgt und der zweite Übertragungskanal vom Quell-Bildsignal als Hilfssignal die vollständigen Bilder 2*n-1 des senderseitigen Bildsignals mit geringer zeitlicher und hoher örtlicher Auflösung digital codiert überträgt, n = 1, 2, 3, ..., und wobei zusätzlich:
- in mindestens dem zweiten Übertragungskanal Bewegungsvektoren übertragen werden;
- in mindestens einem der Übertragungskanäle eine Zusatzinformation über den jeweils anderen Kanal übertragen wird, die zur automatischen Abstimmung auf diesen Kanal verwendbar ist;
- ein Übertragungskanal Referenzsignale für Amplitude und Phasenlage zur Anpassung an Amplitude und Phasenlage des Bildsignals des anderen Kanals überträgt.

3. Empfänger für ein Verfahren nach Anspruch 1 oder 2, **dadurch gekennzeichnet**, daß die Bewegungsvektoren im verbesserten Empfänger korrigiert (221) und bei der Bildsignal-Decodierung ausgewertet werden.

4. Empfänger nach Anspruch 3, **dadurch gekennzeichnet**, daß der Empfänger bei der Bildsignal-Decodierung eigene Bewegungsvektoren bildet und auswertet.

5. Empfänger nach Anspruch 3 oder 4, **dadurch gekennzeichnet**, daß der Empfänger nach einer Abstimmung auf die Empfangsfrequenz des einen Kanals die Zusatzinformation auswertet und selbsttätig den anderen der beiden Kanäle empfängt.

6. Empfänger nach einem oder mehreren der Ansprüche 3 bis 5, **dadurch gekennzeichnet**, daß er mit Hilfe der Referenzsignale die Amplitude und Phasenlage des Bildsignals des ersten Kanals an die Amplitude und Phasenlage des Bildsignals des zweiten Kanals anpaßt.

7. Empfänger für ein Verfahren nach Anspruch 2, **dadurch gekennzeichnet**, daß für die Bildsignal-Decodierung in jedem der beiden Kanäle nur ein Bildspeicher (22) verwendet wird.

## Claims

1. Method for the transmission of a picture signal of high temporal and spatial definition and a large band width over two transmission channels with a smaller band width, whereby the first transmission channel transmits a first, complete picture signal of a known standard with low spatial and high temporal definition which can be decoded and reproduced by a standard receiver, and whereby the second transmission channel transmits an auxilliary signal which can be combined, together with the first picture signal, to form a picture signal of high temporal and spatial definition, **characterized in that** the second transmission channel transmits, as the auxilliary signal, a complete picture signal with high spatial and low temporal definition which can be decoded by an improved receiver without the help of the first picture signal or is decoded combined with the first picture signal - whereby the combined picture signal has high spatial and high temporal definition - and whereby, in addition:
- motion vectors are transmitted over at least the second transmission channel;
- additional information concerning the respectively other channel, which can be used for automatic tuning to this channel, is transmitted in at least one of the two transmission channels;
- one transmission channel transmits reference signals for the amplitude and phase position for the purpose of matching with the amplitude and phase position of the picture signal of the other channel.

2. Method for the transmission of a picture signal of high temporal and spatial definition and a large band width over two transmission channels with a smaller band width, whereby the first transmission channel transmits a first picture signal with low definition and the second transmission channel transmits an auxilliary signal which is combined in an improved receiver, together with the first picture signal, to form a picture signal of high temporal and spatial definition, **characterized in that** the first transmission channel transmits, from the source picture signal, the complete pictures 2*n with low temporal and high spatial definition in digitally coded form and the second transmission channel transmits, from the source picture signal, the complete pictures 2*n-1 with low temporal and high spatial definition in digitally coded form as the auxilliary signal, n = 1, 2, 3, ..., and whereby, in addition:
- motion vectors are transmitted over at least the second transmission channel;
- additional information concerning the respectively other channel, which can be used for automatic tuning to this channel, is transmitted in at least one of the two transmission channels;
- one transmission channel transmits reference signals for the amplitude and phase position for the purpose of matching with the amplitude and phase position of the picture signal of the other channel.

3. Receiver for a method according to claim 1 or 2, **characterized in that** the motion vectors are corrected (221) in the improved receiver and evaluated with the picture signal decoding.

4. Receiver according to claim 3, **characterized in that** the receiver forms and evaluates its own motion vectors with the picture signal decoding.

5. Receiver according to claim 3 or 4, **characterized in that** after tuning to the reception frequency of one channel the receiver evaluates the channel information and automatically receives the other of the two channels.

6. Receiver according to one or more of claims 3 to 5, **characterized in that** it adapts, by means of the reference signals, the amplitude and phase position of the picture signal of the first channel to the amplitude and phase position of the picture signal of the second channel.

7. Receiver for a method according to claim 2, **characterized in that** only one picture memory (22) is used for the decoding of the picture signal in each of the two channels.

## Revendications

1. Procédé pour la transmission d'un signal vidéo de haute définition temporelle et locale et de grande largeur de bande par l'intermédiaire de deux canaux de transmission de largeur de bande réduite, où un premier canal de transmission transmet un signal vidéo complet de faible définition locale et de haute définition temporelle selon une norme connue et qui peut être décodé et rendu au moyen d'un récepteur standard, et où le second canal de transmission transmet un signal auxiliaire qui, dans un récepteur perfectionné, peut être combiné avec le premier signal vidéo pour obtenir un signal vidéo de haute définition temporelle et locale, procédé caractérisé en ce que le signal auxiliaire transmis par l'intermédiaire dudit second canal de transmission, est un signal vidéo complet de haute définition locale et de faible définition temporelle qui peut être reproduit par un récepteur perfectionné sans se servir du premier signal vidéo, ou qui est combiné avec ledit premier signal vidéo pour être décodé sous cette forme, ledit signal vidéo combiné possédant une haute définition locale et temporelle, et où en plus :
- des vecteurs de mouvement sont transmis par l'intermédiaire du second canal au moins ;
- une information complémentaire concernant l'autre canal est transmise par au moins l'un des canaux respectifs, laquelle peut être utilisée pour l'adaptation automatique par rapport au canal en question ;
- des signaux de référence concernant l'amplitude et la position de phase sont transmis par l'un des canaux, afin de permettre une adaptation par rapport à l'amplitude et la position de phase du signal vidéo de l'autre canal.

2. Procédé pour la transmission d'un signal vidéo de haute définition temporelle et locale et de grande largeur de bande par l'intermédiaire de deux canaux de transmission de largeur de bande réduite, où le premier canal de transmission transmet un premier signal vidéo de faible définition et où le second canal de transmission transmet un signal auxiliaire qui, dans un récepteur perfectionné, est combiné avec ledit premier signal vidéo pour obtenir un signal vidéo de haute définition temporelle et locale, procédé caractérisé en ce que le premier canal de transmission transmet, sous un codage numérique, les images complètes 2*n de faible définition temporelle et de haute définition locale du signal vidéo de source, et que le signal auxiliaire transmis par le second canal de transmission, représente les images complètes 2*n-1 du signal vidéo de source, côté émetteur, de faible définition temporelle et de haute définition locale, transmises sous forme de codage numérique, soit n = 1, 2, 3, ..., et où en plus :
- des vecteurs de mouvement sont transmis par l'intermédiaire du second canal au moins ;
- une information complémentaire concernant l'autre canal est transmise par au moins l'un des canaux respectifs, laquelle peut être utilisée pour l'adaptation automatique par rapport au canal en question ;
- des signaux de référence concernant l'amplitude et la position de phase sont transmis par l'un des canaux, afin de permettre une adaptation par rapport à l'amplitude et la position de phase du signal vidéo de l'autre canal.

3. Récepteur pour un procédé selon l'une quelconque des revendications 1 ou 2 caractérisé en ce que les vecteurs de mouvement sont corrigé dans ce récepteur perfectionné (221) et analysés au moment du décodage du signal vidéo.

4. Récepteur selon la revendication 3 caractérisé en ce que, au moment du décodage du signal vidéo, ledit récepteur forme et analyse ses propres vecteurs de mouvement.

5. Récepteur selon l'une quelconque des revendications 3 ou 4 caractérisé en ce que, après une adaptation par rapport à la fréquence de réception de l'un des canaux, ledit récepteur analyse l'information complémentaire pour capter automatiquement l'autre des deux canaux.

6. Récepteur selon l'une quelconque ou plusieurs des revendications 3 à 5 caractérisé en ce qu'il se sert des signaux de référence pour l'amplitude et la position de phase du signal vidéo pour adapter l'amplitude et la position de phase du signal vidéo provenant du premier canal aux amplitude et position de phase du signal vidéo du second canal.

7. Récepteur pour un procédé selon la revendication 2 caractérisé en ce qu'une seule mémoire d'image (22) est nécessaire dans chacun des canaux pour réaliser le décodage des signaux vidéo.
